# EUROPÄISCHE PATENTSCHRIFT

(11) **EP 2 795 082 B1**
(45) Veröffentlichungstag und Bekanntmachung des Hinweises auf die Patenterteilung: **15.05.2019**
(21) Anmeldenummer: 12799574.4
(22) Anmeldetag: 13.12.2012
(51) Int. Cl.: F02B 75/04

(54) **PLEUELSTANGE FÜR EINE HUBKOLBENMASCHINE**
CONNECTING ROD FOR A RECIPROCATING-PISTON ENGINE
BIELLE DE MOTEUR À PISTONS ALTERNATIFS

(30) Priorität: 23.12.2011 AT 500202011
(43) Veröffentlichungstag der Anmeldung: 29.10.2014
(73) Patentinhaber: AVL List GmbH, 8020 Graz (AT)
(72) Erfinder: MELDE-TUCZAI, Helmut, A-8042 Graz (AT)
(74) Vertreter: Babeluk, Michael
(86) Internationale Anmeldenummer: PCT/EP2012/075344
(87) Internationale Veröffentlichungsnummer: WO 2013/092364

(56) Entgegenhaltungen:
- CN-A- 101 109 321
- DE-A1- 4 226 361
- GB-A- 2 370 315
- JP-A- 63 195 340
- US-A- 4 809 650
- US-A1- 2011 226 220

## Beschreibung

Die Erfindung betrifft eine längenverstellbare Pleuelstange für eine Hubkolbenmaschine, insbesondere Brennkraftmaschine, mit zumindest einem ersten und einem zweiten Stangenteil welche beiden Stangenteile teleskopartig zu- und/ oder ineinander verschiebbar sind, wobei der zweite Stangenteil einen Führungszylinder und der erste Stangenteil ein im Führungszylinder längsverschiebbares Kolbenelement ausbildet, wobei zwischen dem ersten und dem zweiten Stangenteil ein Hochdruckraum aufgespannt ist, in den zumindest ein erster Ölkanal einmündet, in welchem zumindest ein als Steuerventil ausgebildetes Ventil angeordnet ist, dessen Stellglied durch eine Rückstellfeder in eine erste Stellung und durch Öldruck entgegen der Kraft der Rückstellfeder in eine zweite Stellung verschiebbar ist.

Die DE 101 51 517 A1 beschreibt eine Kolben- und Pleuelstangenanordnung mit variabler Länge zur Erzeugung eines variablen Verdichtungsverhältnisses in einem Verbrennungsmotor, mit einem ersten Teil und einem zweiten Teil, die mit einem Längenänderungsmechanismus gekoppelt sind, der zwischen den Teilen aufgenommen ist. Der Längenänderungsmechanismus weist eine kegelstumpfförmige Federscheibe und eine elastomere Masse auf, die an einer konkaven Fläche der Federscheibe anliegt.

Weitere Pleuelstangen mit jeweils einem hydraulischen teleskopartigen Mechanismus zur Verstellung der Pleuellänge sind aus den Druckschriften FR 2 857 408 A1, EP 1 243 773 A1, WO 02/10568 A1, DE 198 35 146 A1, US 4 370 901 A, US 4 195 601 A, US 4 124 002 A und US 2 134 995 A bekannt. Die Druckschrift US 2,217,721 A offenbart eine Brennkraftmaschine mit einer längenverstellbaren Pleuelstange mit einem ersten und einem zweiten Stangenteil, welche Stangenteile teleskopartig zu - und ineinander verschiebbar sind. Zwischen den beiden Stangenteilen ist ein Hochdruckraum aufgespannt, in den ein Ölkanal einmündet. Zur Rückbefüllung und Entleerung des Hochdruckraumes mit Öl und somit zur Längenverstellung der Pleuelstange ist ein Steuerventil mit einem axial verschiebbaren Verschlussteilelement vorgesehen, welches durch eine Rückstellfeder in eine erste geschlossene Stellung und durch Öldruck entgegen der Kraft der Rückstellfeder in eine zweite offene Stellung verschiebbar ist.

Eine Brennkraftmaschine mit einer längenverstellbaren Pleuelstange ist auch aus DE4226361 bekannt.

Eine Brennkraftmaschine mit einem längenverstellbaren Kolben ist aus US4809650 bekannt.

Durch Ändern der Verdichtung kann Volllast mit geringerem Verdichtungsverhältnis, und Teillast und Starten mit erhöhtem Verhältnis gefahren werden. Dabei wird im Teillastbereich der Verbrauch verbessert, beim Start der Kompressionsdruck mit dem erhöhtem Verdichtungsverhältnis gesteigert und bei hoher Leistung der Spitzendruck mit verringertem Verhältnis reduziert, sowie Klopfen verhindert.

Es ist bekannt, zur Verstellung des Verdichtungsverhältnisses einen exzentrischen Kolbenbolzen oder einen exzentrischen Hubzapfen der Kurbelwelle einzusetzen. Weiters ist es bekannt, zur Veränderung des Verdichtungsverhältnisses den ganzen Zylinderblock zu heben oder die gesamte Kurbelwellenlagerung mit einer exzentrischen Lagerung derselben im Kurbelgehäuse zu senken.

All diese Vorschläge setzen einen hohen konstruktiven und steuerungstechnischen Aufwand voraus.

Aufgabe der Erfindung ist es, diese Nachteile zu vermeiden und eine einfache Lösung für die Änderung des Verdichtungsverhältnisses bereitzustellen.

Erfindungsgemäß wird dies dadurch erreicht, dass in den Hochdruckraum ein als Zuführkanal ausgebildeter zweiter Ölkanal einmündet, in welchem ein in Richtung des Hochdruckraumes öffnendes Rückschlagventil angeordnet ist, wobei das Steuerventil einen in einer Aufnahmebohrung axial verschiebbaren Stellkolben aufweist, welcher den ersten und zweiten Ölkanal auf- und zusteuert, wobei vorzugsweise in der ersten Stellung der erste Ölkanal geschlossen und in der zweiten Stellung geöffnet ist.

Eine einfache Steuerung ergibt sich dadurch, dass der erste Ölkanal als Zu- und Abflusskanal ausgebildet ist.

In die Aufnahmebohrung mündet ein mit dem Pleuellager strömungsverbundener Ölversorgungskanal ein, wobei besonders vorzugsweise im Ölversorgungskanal eine Drosselstelle angeordnet ist. Dadurch kann eine beim Ansaugen durch die Massenkraft des ersten Stangenteils entstehende Unterdruckwelle in Bezug auf das Öl im Pleuellager abgeschwächt werden. Dabei kann der zweite Ölzuführkanal von der Aufnahmebohrung des Steuerventils oder vom Ölversorgungskanal ausgehen.

In einer fertigungstechnisch einfachen Ausführungsform der Erfindung ist vorgesehen, dass die Aufnahmebohrung durch eine Bohrung quer zur Längsachse der Pleuelstange gebildet ist. Eine besonders kompakte Ausführung lässt sich erzielen, wenn das Ventil im Bereich eines großen Pleuelauges der Pleuelstange angeordnet ist.

Die Erfindung wird im Folgenden anhand der Figuren näher erläutert. Es zeigen:
- Fig. 1: eine erfindungsgemäße Pleuelstange in einem Schnitt gemäß der Linie I - I in Fig. 2 in einer ersten Schaltstellung;
- Fig. 2: die Pleuelstange in einem Schnitt gemäß der Linie II - II in Fig. 1; und
- Fig. 3: die Pleuelstange in einem Schnitt analog zur Fig. 1 in einer zweiten Schaltstellung.

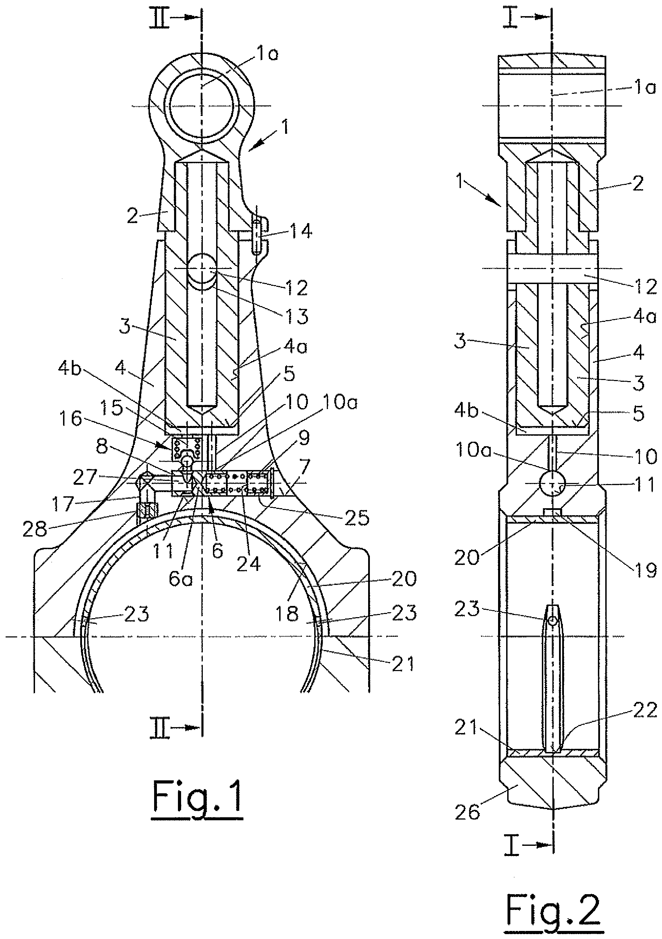

In den Fig. 1 bis Fig. 3 ist jeweils eine zweigeteilte Pleuelstange 1 einer Brennkraftmaschine dargestellt. Im oberen ersten Stangenteil 2 ist ein zylindrisches Kolbenelement 3 eingepresst. Der untere Teil dieses Kolbenelementes 3 sitzt mit Spielsitz in einem Führungszylinder 4a des unteren zweiten Stangenteils 4 der Pleuelstange 1, wobei zwischen dem Kolbenelement 3 und dem zweiten Stangenteil 4 in zumindest einer Lage der beiden Stangenteile 2, 4 ein Hochdruckraum 4b aufgespannt wird. Eine an den Hochdruckraum 4b grenzende druckseitige untere Stirnfläche 5 des Kolbenelementes 3 wird vom Motoröl beaufschlagt. Die Ölzufuhr, Sperre und Ablauf des Öles wird von einem in einem in einem ersten Ölkanal 10 angeordneten Steuerventil 6, welches einen in einer Aufnahmebohrung 7 axial verschiebbaren Stellkolben 6a aufweist, über den Öldruck an der nicht weiter dargestellten Ölpumpe mittels eines ebenfalls nicht dargestellten Druckregelventils gesteuert. Ein nicht dargestellter Aktuator spannt eine Feder im Regelventil der Ölpumpe mehr oder weniger vor.

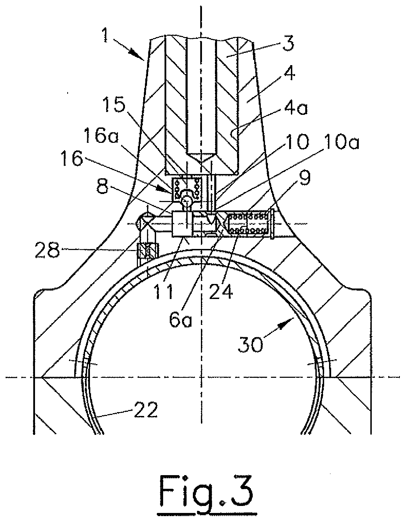

Fig. 1 zeigt die Pleuelstange 1 in einer einem hohen Verdichtungsverhältnis zugeordneten ersten Stellung und Fig. 3 in einer einem niedrigen Verdichtungsverhältnis zugeordneten zweiten Stellung.

Der Stellkolben 6a wird in seiner durch eine Bohrung quer zur Längsachse 1a der Pleuelstange 1 gebildeten Aufnahmebohrung 7 durch die Kraft der Rückstellfeder 9 bei niedrigem Öldruckniveau gegen einen ersten Anschlag 8 gedrückt. Das Motoröl wird von der Massenkraft über das in einem zweiten Ölkanal 15 angeordnete Rückschlagventil 16 unter die Stirnfläche 5 des Kolbens 3 angesaugt. Der Steuerkolben 6a sperrt mit seinem Zylindermantel 11 den eine Zu- und Ablauföffnung bildenden ersten Ölkanal 10. Das angesaugte Öl kann nicht entweichen und ist nicht kompressibel. Als Folge wird das Kolbenelement 3 gehoben und die Pleuelstange 1 somit länger. Auf diese Weise kann ein höheres Verdichtungsverhältnis bei normalem und niedrigem Öldruck eingestellt werden. Wird nun der Regeldruck der Ölpumpe erhöht, wird der Steuerkolben 6a, wie in Fig. 3 dargestellt ist, in seiner Aufnahmebohrung 7 vom Motoröl gegen den zweiten Anschlag 24 gedrückt, welcher von der Federführung 25 gebildet ist. Die Rückstellfeder 9 wird dabei zusammengedrückt. Eine Verbindungsöffnung 10a des ersten Ölkanals 10 für das Motoröl aus dem Pleuellager 30 zur Stirnfläche 5 wird durch den Steuerkolben 6 geöffnet. In dieser Stellung drückt der Gasdruck aus dem nicht weiter ersichtlichen Brennraum das Kolbenelement 3 ganz nach unten, wodurch sich ein kleineres Verdichtungsverhältnis einstellt.

Besonders vorteilhaft ist, dass auch in einem unteren Leerlaufbereich der Brennkraftmaschine, wenn der Motoröldruck kleiner als der Regeldruck ist, ein höheres Verdichtungsverhältnis eingestellt werden kann, was den Verbrauch im Niederlastbereich verbessert und einen Kaltstart erleichtert. Um das hohe Verdichtungsverhältnis über längere Zeit beizubehalten, müssen die Leckageverluste durch den Spielsitz des Führungszylinders 4a aus dem Hochdruckraum 4b unter der Stirnfläche 5 des Kolbenelementes 3 in den selben wieder nachgefüllt werden. Dies geschieht dadurch, dass die Massenkraft das Motoröl aus der inneren Bohrung 27 des Steuerkolbens 6a über das Rückschlagventil 16 (Nachfüllventil) in den Hochdruckraum 4b unter der Stirnfläche 5 ansaugt. Beim nachfolgenden Verdichtungstakt baut sich der Hochdruck wieder auf und die kleine Kugel 16a im Rückschlagventil 16 verhindert das Entweichen des Öles aus dem Hochdruckraum 4b. Dieser Vorgang wiederholt sich bei jedem Arbeitszyklus. Will man das Verdichtungsverhältnis wieder senken, wird der Regeldruck der Ölpumpe erhöht und der Steuerkolben 6 vom Öldruck gegen den zweiten Anschlag 24 gedrückt und die Verbindungsöffnung 10a zum Pleuellager 30 somit geöffnet. Der Gasdruck drückt das Kolbenelement 3 nach unten und das niedrigere Verdichtungsverhältnis ist wieder eingestellt. Der Steuerkolben 6 wird in seiner Aufnahmebohrung 7 vom Öldruck und der Rückstellfeder 9 zwischen den Anschlägen 8 bei niedrigem Öldruck und 24 bei hohem Öldruck hin- und hergeschoben.

Ein zylindrischer Stift 12, der im Kolbenelement 3 eingepresst ist, verhindert das Herausfliegen des ersten Teils 2 der Pleuelstange 1 durch die Massenkraft. Der Stift 12 kann sich in einem Langloch 13 im unteren zweiten Stangenteil 4 der Pleuelstange 1 entsprechend der geplanten Verlängerung der Pleuelstange 1 auf- und abbewegen.

Die Ölversorgung der Aufnahmebohrung 7 des Steuerkolbens 6 und seiner inneren Bohrung 27 erfolgt über den Ölversorgungskanal 17. Diese mündet in eine Nut 19, in der Grundbohrung 18 der Pleuellagerschale 20 des Pleuellagers 30. Diese Nut 19 in der Pleuelstange 1 ist mit einer Nut 22 in der Unterschale 21 über Bohrungen 23 strömungsverbunden. Die Unterschale 21 sitzt im Pleuelstangendeckel 26.

Um die Unterdruckwelle , die beim Ansaugen durch die Massenkraft entsteht, gegenüber dem Öl in der Nut 19 abzuschwächen, wird eine Drossel 28 in der Versorgungsbohrung 17 eingebaut.

Ein axialer Stift 14 sichert den oberen ersten Teil 3 gegen Verdrehen.

## Patentansprüche

1. Längenverstellbare Pleuelstange (1) für eine Hubkolbenmaschine, insbesondere Brennkraftmaschine, mit zumindest einem ersten und einem zweiten Stangenteil (2, 4), welche beiden Stangenteile (2, 4) teleskopartig zu- und/ oder ineinander verschiebbar sind, wobei der zweite Stangenteil (4) einen Führungszylinder (4a) und der erste Stangenteil (2) ein im Führungszylinder (4a) längsverschiebbares Kolbenelement (3) ausbildet, wobei zwischen dem ersten und dem zweiten Stangenteil (2, 4) ein Hochdruckraum (4b) aufgespannt ist, in den zumindest ein erster Ölkanal (10) und ein als Zuführkanal ausgebildeter zweiter Ölkanal (15) einmünden, wobei im ersten Ölkanal (10) zumindest ein Ventil angeordnet ist, dessen Stellglied durch eine Rückstellfeder (9) in eine erste Stellung und durch Öldruck entgegen der Kraft der Rückstellfeder (9) in eine zweite Stellung verschiebbar ist, wobei im zweiten Ölkanal (15) ein in Richtung des Hochdruckraumes (4b) öffnendes Rückschlagventil (16) angeordnet ist, **dadurch gekennzeichnet, dass** der erste Ölkanal (10) als Zu- und Abflusskanal ausgebildet ist und das im ersten Ölkanal (10) angeordnete Ventil als Steuerventil (6) ausgebildet ist, das einen in einer Aufnahmebohrung (7) axial verschiebbaren Stellkolben (6a) aufweist, wobei in die Aufnahmebohrung (7) ein mit dem Pleuellager (30) strömungsverbundener Ölversorgungskanal (17) einmündet und der Stellkolben (6a) den ersten und zweiten Ölkanal (10, 15) auf- und zusteuert und in der ersten Stellung des Steuerventils (6) der erste Ölkanal (10) geschlossen und in der zweiten Stellung des Steuerventils (6) der erste Ölkanal (10) und eine Verbindungsöffnung (10a) des ersten Ölkanals (10) zu einem Pleuellager (30) geöffnet ist.

2. Pleuelstange (1) nach Anspruch 1, **dadurch gekennzeichnet, dass** im Ölversorgungskanal (17) eine Drosselstelle (28) angeordnet ist.

3. Pleuelstange (1) nach Anspruch 1 oder 2, **dadurch gekennzeichnet, dass** der zweite Ölzuführkanal (15) von der Aufnahmebohrung (7) des Steuerventils (6) oder vom Ölversorgungskanal (17) ausgeht.

4. Pleuelstange (1) nach einem der Ansprüche 1 bis 3, **dadurch gekennzeichnet, dass** die Aufnahmebohrung (7) durch eine Bohrung quer zur Längsachse (1a) der Pleuelstange (1) gebildet ist.

5. Pleuelstange (1) nach einem der Ansprüche 1 bis 4, **dadurch gekennzeichnet, dass** das Steuerventil (6) im Bereich eines Pleuellagers (30) der Pleuelstange (1) angeordnet ist.

## Claims

1. Length-adjustable connecting rod (1) for a reciprocating-piston engine, in particular an internal combustion engine, comprising at least one first and one second rod part (2, 4), which two rod parts (2, 4) are telescopically displaceable towards and/or into one another, wherein the second rod part (4) forms a guide cylinder (4a) and the first rod part (2) forms a piston element (3) which is longitudinally displaceable in the guide cylinder (4a), wherein a high-pressure chamber (4b) is defined between the first and the second rod part (2, 4), into which open at least one first oil channel (10) and one second oil channel (15) which is designed as a feed channel, wherein at least one valve is arranged in the first oil channel (10), the actuator of which valve can be displaced into a first position by a return spring (9) and into a second position by oil pressure against the force of the return spring (9), wherein a non-return valve (16) opening in the direction of the high-pressure chamber (4b) is arranged in the second oil channel (15), **characterised in that** the first oil channel (10) is constructed as an inflow and outflow channel and the valve arranged in the first oil channel (10) is constructed as a control valve (6) which has an actuating piston (6a) axially displaceable in a receiving bore (7), wherein an oil supply channel (17) flow-connected to the connecting rod bearing (30) opens into the receiving bore (7) and the actuating piston (6a) activates and deactivates the first and second oil channels (10), 15) and, in the first position of the control valve (6), the first oil channel (10) is closed and, in the second position of the control valve (6), the first oil channel (10) and a connecting opening (10a) of the first oil channel (10) to a connecting rod bearing (30) are opened.

2. Connecting rod (1) according to claim 1, **characterised in that** a throttle point (28) is arranged in the oil supply channel (17).

3. Connecting rod (1) according to claim 1 or 2, **characterised in that** the second oil supply channel (15) originates from the receiving bore (7) of the control valve (6) or from the oil supply channel (17).

4. Connecting rod (1) according to one of claims 1 to 3, **characterised in that** the receiving bore (7) is formed by a bore transversely to the longitudinal axis (1a) of the connecting rod (1).

5. Connecting rod (1) according to one of claims 1 to 4, **characterised in that** the control valve (6) is arranged in the region of a connecting rod bearing (30) of the connecting rod (1).

## Revendications

1. Bielle réglable en hauteur (1) destinée à un moteur à pistons alternatifs, en particulier un moteur à combustion interne comprenant au moins une première partie de bielle et une seconde partie de bielle (2, 4), ces deux parties de bielle (2, 4) pouvant se déployer et/ou se rétracter téles-copiquement l'une dans l'autre, la seconde partie de bielle (4) formant un cylindre de guidage (4a) et la première partie de bielle (2) formant un élément de piston (3) coulissant longitudinalement dans le cylindre de guidage (4a), entre la première partie de bielle et la deuxième partie de bielle (2, 4) étant définie une chambre haute pression (4b) dans laquelle débouchent au moins un premier canal d'huile (10) et un second canal d'huile (15) réalisé sous la forme d'un canal d'alimentation, dans le premier canal d'huile (10) étant montée au moins une soupape dont l'actionneur peut être déplacé par translation dans une première position par un ressort de rappel (9), et dans une seconde position, par la pression d'huile et contre la force du ressort de rappel (9) dans le second canal d'huile (15) étant montée une soupape anti retour (16) s'ouvrant en direction de la chambre haute pression (4b),
**caractérisé en ce que**
le premier canal (10) est réalisé sous la forme d'un canal d'entrée et de sortie, et la soupape montée dans le premier canal d'huile (10) est réalisée sous la forme d'une soupape de commande (6) qui comporte un piston d'actionnement (6a) coulissant axialement dans un perçage de réception (7), dans le perçage de réception (7) débouchant un canal d'alimentation en huile (17) relié fluidiquement à un palier de bielle (30), et le piston d'actionnement (6a) commandant l'ouverture et la fermeture du premier canal d'huile et du second canal d'huile (10, 15), et dans la première position de la soupape de commande (6) le premier canal d'huile (10) est fermé et dans la seconde position de la soupape de commande (6) le premier canal d'huile (10) et une ouverture de liaison (10a) du premier canal d'huile (10) vers le palier de bielle (30) sont ouverts.

2. Bielle (1) conforme à la revendication 1,
**caractérisée en ce qu'**
un point d'étranglement (28) est situé dans le canal d'alimentation en huile (17).

3. Bielle (1) conforme à la revendication 1 ou 2,
**caractérisée en ce que**
le second canal d'huile (15) part du perçage de réception (7) de la soupape de commande (6) ou du canal d'alimentation en huile (17).

4. Bielle (1) conforme à l'une des revendications 1 à 3,
**caractérisée en ce que**
le perçage de réception (7) est formé par un perçage transversal à l'axe longitudinal (1a) de la bielle (1).

5. Bielle (1) conforme à l'une des revendications 1 à 4,
**caractérisée en ce que**
la soupape de commande (6) est située dans la zone d'un palier (30) de la bielle (1).
